# EUROPEAN PATENT SPECIFICATION

(11) **EP 1 683 248 B1**
(45) Date of publication and mention of the grant of the patent: **30.07.2008**
(21) Application number: 05817012.7
(22) Date of filing: 26.11.2005
(51) Int. Cl.: H02G 7/20

(54) **HIGH-TENSION TOWER, POWER TRANSPORTING SYSTEM, POWER TRANSPORTING METHOD AND ASSEMBLING METHOD**
HOCHSPANNUNGS-TURM, ENERGIETRANSPORTSYSTEM, ENERGIETRANSPORTVERFAHREN UND ZUSAMMENBAUVERFAHREN
TOUR A HAUTE TENSION, SYSTEME DE TRANSPORT D'ENERGIE, PROCEDE DE TRANSPORT D'ENERGIE ET PROCEDE D'ASSEMBLAGE

(30) Priority: 26.11.2004 NL 1027605
(43) Date of publication of application: 26.07.2006
(73) Proprietor: Movares Nederland B.V., 3511 SX Utrecht (NL)
(72) Inventor: VÁKÁR, Laszló, Imre, NL-3818 JB Amersfoort (NL); SMULDERS, Hendriekus, Wilhelmus, Maria, NL-5231 WL 's-Hertogenbosch (NL)
(74) Representative: van Weele, Paul Johannes Frits
(86) International application number: PCT/NL2005/000814
(87) International publication number: WO 2006/057559

(56) References cited:
- WO-A-98/00615
- SE-B- 460 447
- SU-A- 508 844
- US-A- 4 615 154

## Description

The present invention relates to a high-voltage mast, a system for transporting energy, and a method for transporting energy.

For the transport of electrical energy use is usually made of high-voltage lines in which high-voltage masts are applied to support transport conductors at a safe height. In order to limit magnetic fields (H or B fields) on or close to the ground surface and magnetic induction, use is made here of decreasing the strength thereof from a distance. The height of the mast and the distance of the transporting line from for instance buildings are functional here. A strip is kept clear of such buildings on either side of a high-voltage line. This strip is also referred to as right of way. Such a strip is very expensive, for instance because of the space it uses. There are guidelines and/or standards relating to the permissible field strength outside the right of way, such as for instance 0.4 microTesla (*µ*T) in the Netherlands. A possible solution herefor is to apply higher masts. However, such masts hereby become more costly.

However, the electrical insulating material is fibre reinforced concrete. It is an object of the present invention to improve the high-voltage mast.

WO 98/00615 discloses a high-voltage mast for supporting a number of conductors, comprising an upright, one or more crossarms fixable to the upright for mounting thereon at least a part of the conductors, a number of first mounting members fixed to the upright and/or crossarms for the purpose of mounting the conductors, wherein the upright and/or crossarms comprise at least one electrically insulating part at the position of the mounting height of the conductors, wherein above a predetermined height at least the crossarms are constructed from electrically insulating material.

In a first aspect the present invention provides a high-voltage mast for supporting a number of conductors, comprising:
- crossarms made of synthetic material such as plastic
- the first mounting members arranged as assembly on the upright such that they are situated in a polygon substantially on the periphery of an imaginary circle or ellipse.

Through the use of the insulating part the transport conductors can be arranged a short distance from the upright, whereby the transporting lines can be placed closely together, which is favourable for the fields on or close to the ground surface. Such high-voltage masts provide an advantageous light construction due to the use of the insulating part, which can for instance be embodied in a relatively light plastic.

As the high-voltage mast is constructed from insulating material, such as a plastic, the mast can be manufactured in simple manner by means of for instance a prefabrication process, whereafter it can be transported as one whole to the position of use.

Further advantages of such an embodiment are that the application of plastic produces a mast requiring relatively little maintenance. Maintenance cost are hereby reduced. A mast of plastic further has a relatively small impact on the environment compared to a metal mast, since there occurs no leaching of metals and/or preservatives.

A mast of plastic has a small number of components, whereby construction time is much shorter than in the case of a known mast. Less construction damage also occurs, for instance due to the low weight. The low weight makes it possible for the foundation to take a lighter form. Also an advantage is that the design freedom is much greater in respect of materials, whereby designs can be more readily modified to local wishes.

The surface of the mast and/or crossarms preferably comprises corrugations. Such corrugations lengthen the leakage path for leakage currents, whereby the compact construction of the mast is also made possible. These corrugations also contribute toward the small distance between the transport conductors.

In order to strengthen the construction the mast preferably comprises a stay comprising electrically insulating material. A plastic stay of materials with a high tensile strength for instance provides the option of giving the upright and the crossarms a lighter form. This provides advantages in manufacture and transport. A lighter construction also has less of an impact on the environment in respect of visibility.

As the crossarms and the first mounting members in the high-voltage mast are arranged as assembly on the upright in an imaginary polygon such that the corner points are situated substantially on the periphery of an imaginary circle or ellipse, the average field strengths of a transport line on or close to the ground surface are hereby further reduced while the energy transport is the same.

The conductors can preferably be mounted in the high-voltage mast substantially adjacently of the crossarms by means of the first mounting members. The conventional use of chain insulators is hereby unnecessary, which reduces lateral swinging of the transport conductors. The bias on the transport conductors can also be increased relative to existing systems. These measures reduce the occurrence of so-called cable dancing or galloping of the transport conductors, whereby a smaller distance between these transport conductors becomes possible. Because there is less sag in the transport conductors, they hang relatively high on average. There is therefore the possibility for instance of giving the mast a lower form and/or making the right of way narrower.

A further aspect of the present invention relates to a system for transporting electrical energy along a route, comprising:
- a number of high-voltage masts which support a predetermined number of transport conductors;
- a system comprising a number of high-voltage masts, wherein a predetermined number of transport conductors are mounted on the masts by means of the corresponding first mounting members of mutually adjacent masts.

In a further preferred embodiment, compensation conductors are provided in or close to the ground for narrowing the electromagnetic field to a significant extent. As such, compensation conductors are known from SE-460447.

The mast can hereby take a considerably lower form, which enhances the advantages stated in the foregoing.

In a further embodiment the high-voltage mast comprises second mounting members for mast compensation conductors. These mast compensation conductors serve to narrow the electromagnetic fields, and as a result the mast can be given a lower form or the right of way adjacently of the transport route can be narrowed. By mutually connecting the mast compensation conductors to the ground compensation conductors in crosswise and galvanic manner, the energy for power supply to the ground compensation conductors is obtained by means of induction.

Such a system preferably comprises:
- one or more mast compensation conductors which are mounted on the mast by means of corresponding second mounting members of mutually adjacent masts;
- a number of electrical connecting members arranged in a predetermined number of masts, wherein the mast compensation conductors can be connected in crosswise manner to the ground compensation conductors by means of the connecting member.

It hereby becomes possible in passive manner and subject to the current being transported, and thereby subject to the electromagnetic fields that are present, to compensate these fields in simple manner. Use is made here of an inductive coupling to the transport conductors. Owing to this coupling an induced current will begin to flow in the circuit of the compensation conductors and the connecting members.

In a further preferred embodiment the ground compensation conductors can be provided with energy by means of a controllable power source. A predetermined or a variable desired compensation, and thereby narrowing of the electromagnetic fields, can herein be achieved. The compensation wires and the connecting member in the mast can further be omitted.

The ground compensation conductors are preferably insulated relative to the ground. There are hereby no or fewer losses in the operation of generating the compensation field.

A further aspect of the present invention relates to a system comprising a number of high-voltage masts as described in the foregoing, comprising a predetermined number of transport conductors which are mounted on the masts by means of the corresponding first mounting members of mutually adjacent masts. By combining respective embodiments various of the said advantages can be enhanced.

Such a system preferably comprises a predetermined number of tensioning devices for placing and holding at least the transport conductors under mechanical bias. As stated, slewing of the transport wires can hereby be limited and the mutual spacing thereof can therefore be of smaller dimension. The sagging of the transport conductors is hereby relatively high on average. There is therefore the possibility for instance of giving the masts a lower form and/or of narrowing the right of way.

A further aspect of the present invention relates to a method for transporting electrical energy by means of a number of high-voltage masts comprising an upright, one or more crossarms fixable to the upright for mounting thereon at least a part of the conductors, a number of first mounting members fixed to the upright and/or the crossarms for the purpose of mounting the conductors, wherein the upright and/or crossarms comprise at least one electrically insulating part at the position of the mounting height of the conductors, wherein above a predetermined height at least the crossarms are constructed from electrically insulating material, the crossarms and the fist mounting members being arranged as an assembly on the upright, such that they are situated in a polygon substantially in the periphery of an imaginary circle or ellipse, comprising the steps for supplying electrical energy to the system and/or the conductors supported by the mast, causing the energy to flow through the conductors, taking off the energy from the conductors at a predetermined takeoff location, wherein one or more ground compensation conductors are arranged substantially close to the ground surface along the route of the system, said ground compensation conductors being provided with a suitable energy supply for compensating fields coming from the transport conductors.

Such a method offers advantages such as those described with reference to the foregoing devices.

Further advantages, features and details of the present invention will be elucidated on the basis of a description of preferred embodiments, wherein reference will be made to the accompanying figures, in which:
- Figure 1 shows a schematic view of a first embodiment according to the present invention;
- Figure 2 is a schematic view of a second embodiment according to the present invention;
- Figure 3 is a schematic view of a third embodiment according to the present invention;
- Figure 4 shows a view of the embodiment of figure 1 with a schematic representation of the field strengths under the influence of the embodiment;
- Figure 5 shows a view of the embodiment of figure 3 with a representation of the field strength under the influence of the embodiment;
- Figure 6 is a schematic view of a fourth embodiment according to the present invention;
- Figure 7 is a side view of a further preferred embodiment of a high-voltage mast according to the present invention with the conductors and magnetic field strengths shown schematically therein; and
- Figure 8 is a side view of yet another preferred embodiment of a high-voltage mast according to the present invention, shown in similar manner to the embodiment of figure 7.

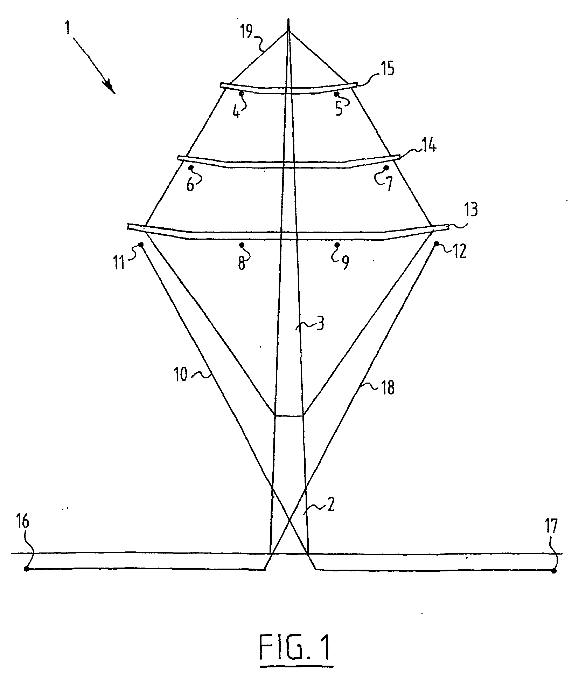

A first embodiment according to the present invention (fig. 1) relates to a high-voltage mast for the purpose of transporting current, preferably 380 kV, with a mast about 31 metres high.

The mast comprises a lower part 2 which is placed using a foundation (not shown). Arranged on lower part 2 is an upper part 3 constructed wholly from plastic. Many different plastics can be envisaged here, such as a glass fibre-reinforced epoxy. This upper part 3 also serves as insulator of the mast.

Mounted on the upper part are three crossarms 13, 14, 15, which are likewise manufactured from a plastic or another insulator. The crossarms and the upper part are preferably manufactured integrally. This is not essential however and depends on conditions.

The transport conductors are mounted on the crossarms in an arrangement of a hexagon along an imaginary circle or ellipse. Conductors 4 and 5 are herein mounted on the upper crossarm 15, conductors 6 and 7 are mounted on the middle crossarm 14 and conductors 8 and 9 are mounted on the lower crossarm 13.

Two mast compensation wires 11 and 12 are further mounted on either side close to the ends of the lower crossarm 13. These two wires are electrically connected to the ground compensation wires. These electrical connections run downward from the two mast compensation wires in crosswise manner along or through the mast to the respective ground compensation wires 17 and 16.

In this embodiment the lower crossarm 13 is situated about 18 metres from the ground. In this embodiment the middle crossarm 14 is situated about 22.3 metres from the ground. In this embodiment the upper crossarm 15 is situated about 26.6 metres from the ground. The transition from metal foot 2 to the plastic top of the mast is situated about 8 metres from the ground.

The ground compensation wires are arranged in this embodiment at a distance of about 17 metres from the foot of the mast.

The foundations of such a low mast can be dimensioned in much more advantageous and lighter manner than in known constructions.

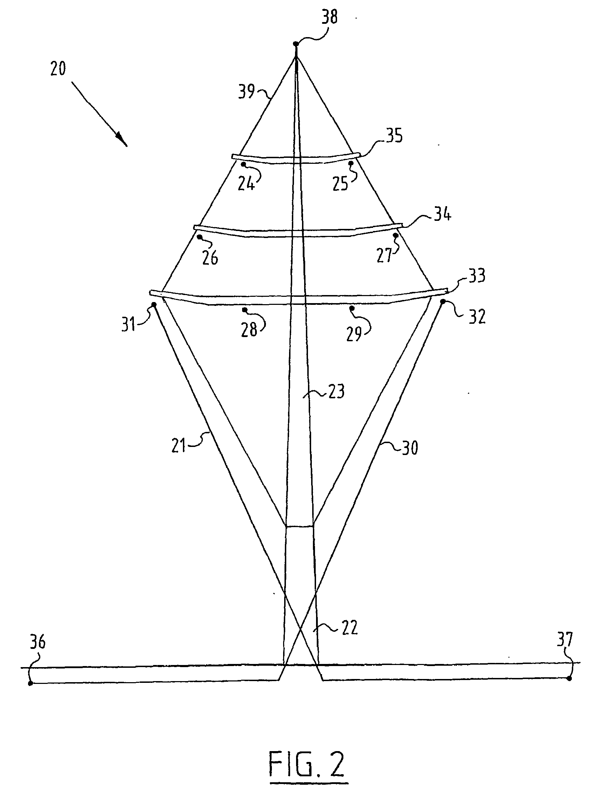

A second embodiment according to the present invention (fig. 2) relates to a high-voltage mast for the purpose of transporting current, preferably 380 kV, with a mast about 36.6 metres high.

The mast comprises a lower part 22 which is placed using a foundation (not shown). Arranged on lower part 22 is an upper part 23 which is constructed wholly from plastic. Many different plastics can be envisaged here, such as a glass fibre-reinforced epoxy. This upper part 23 also serves as insulator of the mast.

Three cross bars 33, 34, 35 are mounted on the upper part. The crossarms and the upper part are preferably manufactured integrally. This is not essential however and depends on conditions.

The transport conductors are mounted on the crossarms in an arrangement of a hexagon along an imaginary ellipse. Conductors 24 and 25 are here mounted on the upper crossarm 35, conductors 26 and 27 are mounted on the middle crossarm 34 and conductors 28 and 29 are mounted on the lower crossarm 33.

Two mast compensation wires 31 and 32 are further mounted on either side close to the ends of the lower crossarm 33. These two wires are coupled to the ground compensation wires by means of an electrical connection. This electrical connection runs downward from the two mast compensation wires in crosswise manner along or through the mast to the respective ground compensation wires 37 and 36.

In this embodiment the lower crossarm 33 is situated about 21 metres from the ground. In this embodiment the middle crossarm 34 is situated about 25.3 metres from the ground. The upper crossarm 35 is situated in this embodiment about 29.6 metres from the ground. The transition from metal foot 2 to the plastic top of the mast is situated about 8 metres from the ground.

In these different embodiments the lower parts 2 and 22 are the same and the plastic upper parts are different. It is likewise possible to keep these plastic parts of different embodiments the same as possible and to vary the foundations and lower parts. The skilled person will here take account of cost factors depending on the location.

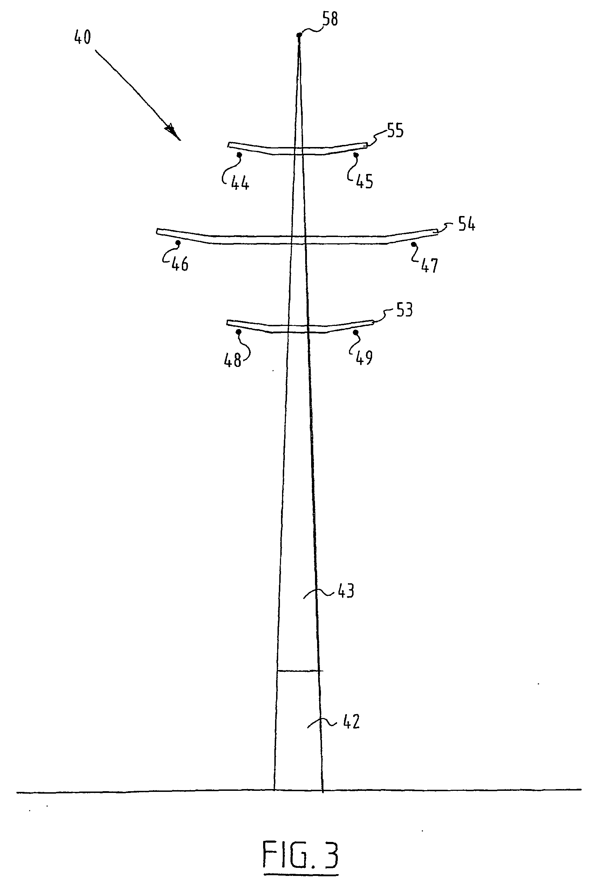

A third embodiment according to the present invention (fig. 3) relates to a high-voltage mast 40 for the purpose of transporting current, preferably 380 kV, with a mast about 44.4 metres high.

The mast comprises a lower part 2 which is placed using a foundation (not shown). Arranged on lower part 2 is an upper part 3 which is constructed wholly from plastic. Many different plastics can be envisaged here, such as a glass fibre-reinforced polyester epoxy or polyethylene and the like. This upper part 3 also serves as insulator of the mast.

Three crossarms 53, 54, 55 are mounted on the upper part. The crossarms and the upper part are preferably manufactured integrally. This is not essential however, and depends on conditions.

The transport conductors are mounted on the crossarms in an arrangement of a hexagon along an imaginary circle. Conductors 44 and 45 are herein mounted on the upper crossarm 55, conductors 46 and 47 are mounted on the middle crossarm 54 and conductors 48 and 49 are mounted on the lower crossarm 53. An optional lightning conductor is arranged in the top.

In this embodiment the lower crossarm 53 is situated about 27 metres from the ground. In this embodiment the middle crossarm 54 is situated about 32.2 metres from the ground. The upper crossarm 55 is situated in this embodiment about 37.4 metres from the ground. The transition from metal foot 2 to the plastic top of the mast is situated about 10 metres from the ground.

In this embodiment ground compensation wires can also be applied which are supplied by means of a controllable power source.

In alternative embodiments two high-voltage transport lines can also be arranged through or along the upright, wherein it is then possible to suffice with two crossarms for the remaining four transport conductors. In a further embodiment it is then possible to provide an additional crossarm for the mast compensation wires.

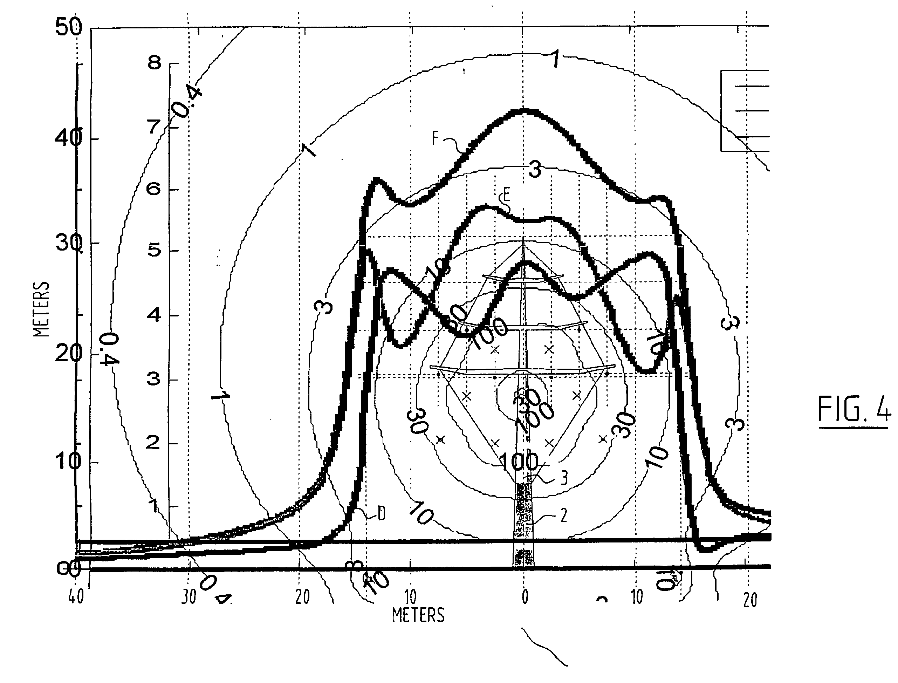

Figure 4 shows how the magnetic fields of the embodiment of figure 1 are compensated strongly downward at the position of the ground compensation wires. This mast can hereby be given a relatively low form and this offers advantages such as low weight, simple placing, light foundation, low maintenance costs, short construction time, small number of parts etc.

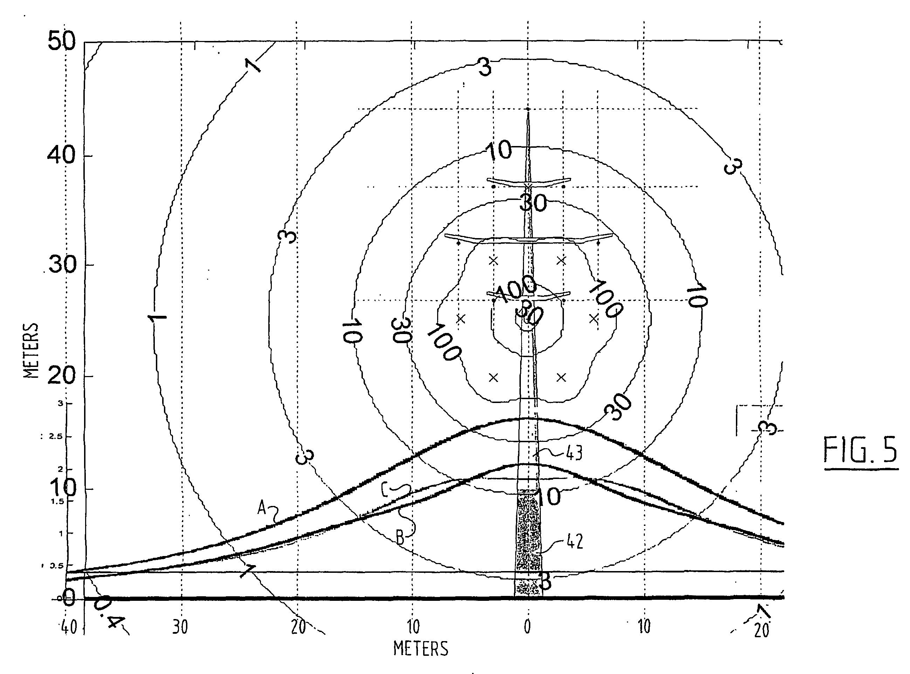

In figure 5 the fields of the embodiment of figure 3 are shown without compensation. These fields appear to be much more divergent. This is because the compensation by the compensation wires is omitted. This mast must therefore be given a higher form but, due to among other things the plastic, insulating embodiment of upper part 43 and the taut wires, the form of the assembly of the transport conductors is highly optimized compared to the prior art, and a lower mast can be realized with the same magnetic field load on the environment. These masts are also advantageous in the manner described in the foregoing.

The high tension on the wires makes it possible to limit the usual sag height of about 15 metres to for instance about 8 metres. The average magnetic field with the same mast is hereby lower closer to the ground, or the mast can be given a lower form with the advantages that the mast and foundation can be given lighter and more advantageous dimensions. These masts are also advantageous in the manner described in the foregoing.

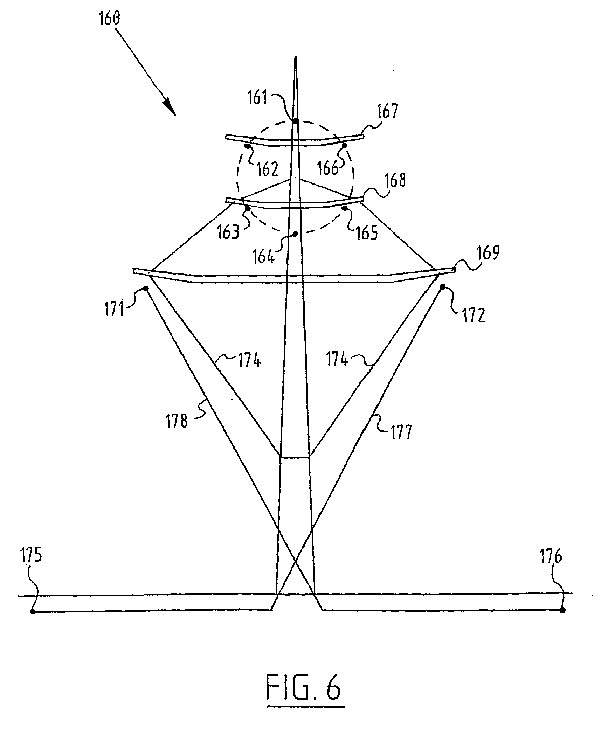

Figure 6 shows a further embodiment. In this embodiment two transport wires 161 and 164 are guided through upright 160. Two further pairs of transport wires 162, 163, 165, 166 are fixed to two crossarms 167, 168. An advantage of this embodiment is that crossarms of relatively small dimensions are required for the transport wires.

The mast compensation wires 171, 172 are mounted on a longer crossarm 169 of narrow dimensions. This is possible because the compensation wires are relatively thin compared to the transport wires. Crossarm 169 is further stayed by means of stays 174.

Two connecting wires 77, 78 are guided along the lower part of stays 74. These serve for crosswise connection of ground compensation wires 75 and 76 to respective mast compensation wires 72 and 71.

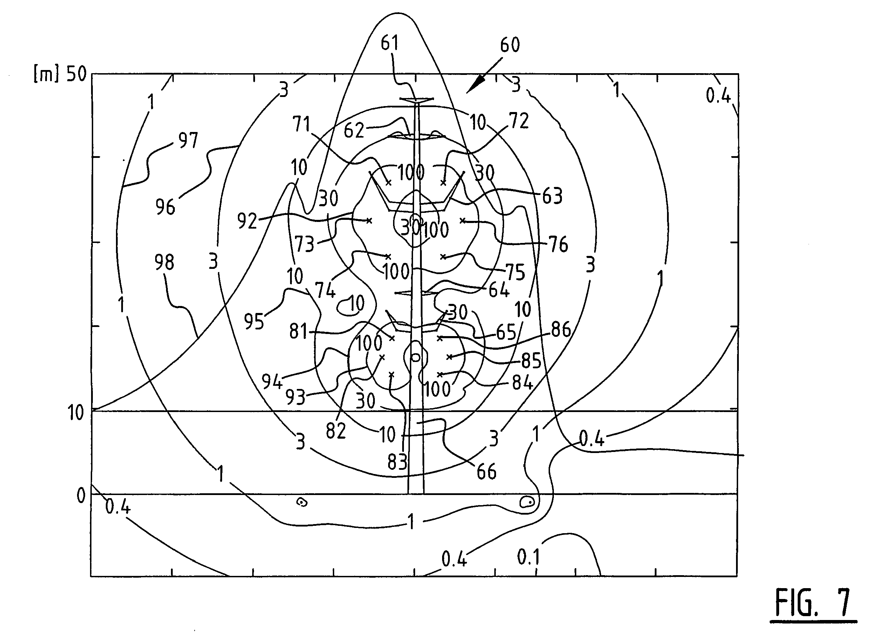

A so-called combimast 60 figure 7 according to the present invention is provided with five crossarms, from top to bottom 61, 62, 63, 64, 65, which are preferably of fibre-reinforced plastic and arranged on an upright 66, likewise preferably of fibre-reinforced plastic, at least for an upper part thereof. Arranged on crossarm 62 are two mounting members, and thereunder a relatively wide crossarm 63. The associated conductor positions in the field are designated with 71, 72, 73, 74, 75 and 76. In this embodiment these conductors carry an electrical voltage of preferably 380 kV. Situated on the smaller crossarm 64, 65 respectively located thereunder are likewise six conductor positions in field 81, 82, 83, 84, 85 and 86, wherein these conductors conduct an electrical current at a voltage of preferably 150 kV. The field strengths generated by the twelve conductors are indicated with substantially concentric lines 91, 93, 94, 95, 96, 97 relative to ground level O, wherein the mast has a height of about 50 metres. The Gaussian curve indicated with line 98 represents the magnetic field strength at a height of 1 metre above ground level as a function of the distance to the centre line of the route. The area where this curve exceeds the value 0.4 µT falls within the right of way.

The embodiment of Fig. 6 has the advantage that the high voltages are located further above ground level, whereby the width of the route can remain limited.

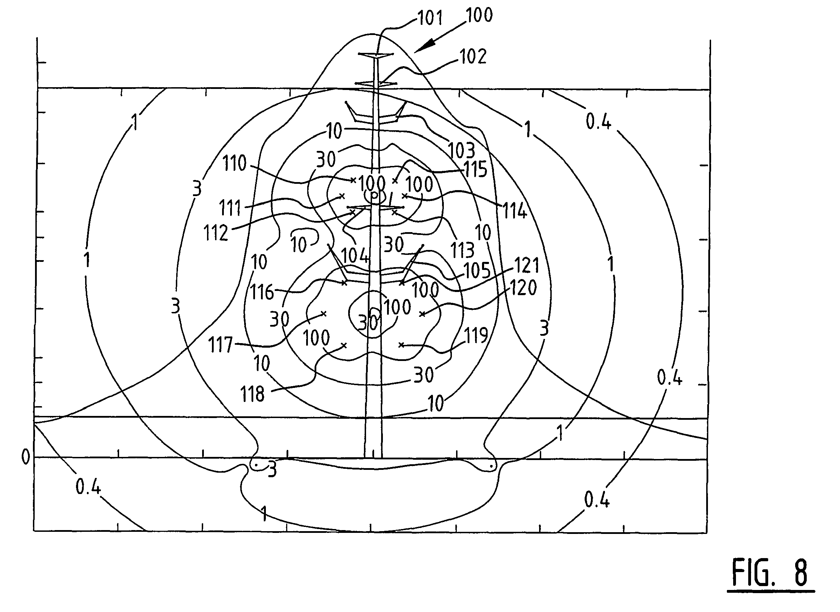

In the embodiment of a high-voltage mast 100 (Fig. 8) crossarms 101, 102, 103, 104, 105 are likewise arranged thereon. In this embodiment the upper conductors which are indicated in the field schematically with 110, 111, 112, 113, 114 and 115 are under a voltage of preferably 150 kV, while conductors in the field 116, 117, 118, 119, 120, 121 are dimensioned for a voltage of preferably 380 kV. The associated magnetic field strengths B are indicated in figure 8 in similar manner as in figure 7.

The embodiment according to Fig. 8 has the advantage that the lighter cables are situated in the upper part of the mast, whereby the mast can be given a more slender form and the foot or foundation for the mast preferably manufactured from plastic can also be given a lighter form.

The combimast according to Fig. 7 and 8 can of course also be embodied for other voltage levels.

In a practical embodiment the masts 60, 100 can be provided with a lightning conductor wire which is guided in or close to the plastic mast and which has a certain influence on the play of the lines of force of the magnetic fields.

The embodiments of Fig. 7 and 8 have the further advantage of saving space and an aesthetically better design.

The combimast according to Fig. 7 and 8 can of course also be optionally provided with compensation conductors in the ground.

The present invention is described in non-limitative manner in the foregoing on the basis of embodiments. Diverse aspects of the described embodiments can be freely combined with each other by the skilled person on the basis of the description. The rights sought are defined by the appended claims.

## Claims

1. High-voltage mast (1, 20, 40, 60, 100, 160) for supporting a number of conductors (4-9, 24-29, 44-49, 71-76, 81-86, 110-115, 116-121, 161-166), comprising:
- an upright (2, 3, 22, 23, 42, 43, 66);
- one or more crossarms (13, 14, 15, 33, 34, 35, 53, 54, 55, 167, 168, 169) fixable to the upright (2, 3, 22, 23, 42, 43, 66) for mounting thereon at least a part of the conductors (4-9, 24-29, 44-49, 71-76, 81-86, 110-115, 116-121, 161-166);
- a number of first mounting members fixed to the upright (2, 3, 22, 23, 42, 43, 66) and/or crossarms (13, 14, 15, 33, 34, 35, 53, 54, 55, 167, 168, 169) for the purpose of mounting the conductors (4-9, 24-29, 44-49, 71-76, 81-86, 110-115, 116-121, 161-166), wherein the upright (2, 3, 22, 23, 42, 43, 66) and/or crossarms (13, 14, 15, 33, 34, 35, 53, 54, 55, 167, 168, 169) comprise at least one electrically insulating part at the position of the mounting height of the conductors (4-9, 24-29, 44-49, 71-76, 81-86, 110-115, 116-121, 161-166), wherein above a predetermined height at least the crossarms (13, 14, 15, 33, 34, 35, 53, 54, 55, 167, 168, 169) are constructed from electrically insulating material , **characterized in that** the crossarms of synthetic material such as plastic (13, 14, 15, 33, 34, 35, 53, 54, 55, 167, 168, 169) and the first mounting members are arranged as assembly on the upright (2, 3, 22, 23, 42, 43, 66) such that they are situated in a polygon substantially on the periphery of an imaginary circle or ellipse.

2. High-voltage mast as claimed in claim 1, wherein the mast and/or the crossarms are manufactured from fibre-reinforced epoxy, polyester or similar synthetic material.

3. High-voltage mast as claimed in one or more of the foregoing claims, comprising second mounting members for mast compensation conductors (11, 12, 31, 32, 171, 172).

4. High-voltage mast as claimed in claim 3, wherein the second mounting members are arranged substantially on the outer ends of the lower crossarm (13, 33, 53, 169).

5. High-voltage mast, according to any of claims 1-4, comprising a connecting member for mutually connecting the mast compensation conductors and the ground compensation conductors (16, 17, 36, 37, 175, 176) in preferably crosswise manner.

6. High-voltage mast, according to any of claims 1-5, wherein the crossarms and the first mounting members are arranged as assembly on the upright such that they form a polygon, preferably a regular polyform in which the corner points are situated substantially on the periphery of an imaginary circle or ellipse, or equivalent curve, at least in respect of the limitation of the magnetic fields.

7. High-voltage mast as claimed in one or more of the foregoing claims, wherein the surface of the mast and/or crossarms comprises corrugations.

8. High-voltage mast as claimed in one or more of the foregoing claims, comprising a stay comprising electrically insulating material, preferably of plastic.

9. High-voltage mast as claimed in one or more of the claims 1-8, wherein the high-voltage mast is provided with a first number of crossarms (62, 63, 104, 105) for supporting a number of conductors (71-76, 116-121) of a first voltage level and a second number of crossarms (64, 65, 102, 103) for supporting conductors (81-86, 110-115) of a second voltage level.

10. High-voltage mast as claimed in claim 9, wherein the first voltage level is in the order of magnitude of preferably 380 kV, and a second voltage level is in the order of magnitude of preferably 150 kV.

11. System comprising a number of high-voltage masts according to one or more of the claims 1-10, wherein a predetermined number of transport conductors are mounted on the masts by means of the corresponding first mounting members of mutually adjacent masts.

12. System as claimed in claim 11, wherein the ground compensation conductors are provided with energy by means of a controllable power source.

13. System as claimed in claim 11 or 12, wherein the ground compensation conductors are insulated relative to the ground.

14. System as claimed in one or more of the claims 12-14, comprising a predetermined number of tensioning devices for placing and holding at least the transport conductors under mechanical bias.

15. Method for transporting electrical energy by means of a number of high-voltage masts according to claim 1, comprising the steps for:
- supplying electrical energy to the system and/or the conductors (4-9, 24-29, 44-49, 71-76, 81-86, 110-115, 116-121, 161-166) supported by the masts according to claim 1 (1, 20, 40, 60, 100, 160),
- causing the energy to flow through the conductors (4-9, 24-29, 44-49, 71-76, 81-86, 110-115, 116-121, 161-166),
- taking off the energy from the conductors (4-9, 24-29, 44-49, 71-76, 81-86, 110-115, 116-121, 161-166) at a predetermined takeoff location,
wherein one or more ground compensation conductors (16, 17, 36, 37, 175, 176) are arranged substantially close to the ground surface along the route of the system, said ground compensation conductors (16, 17, 36, 37, 175, 176) being provided with a suitable energy supply for compensating fields coming from the transport conductors (4-9, 24-29, 44-49, 71-76, 81-86, 110-115, 116-121, 161-166).

## Patentansprüche

1. Hochspannungsmast (1, 20, 40, 60, 100, 160) zum Tragen einer Anzahl von Leitungen (4-9, 24-29, 44-49, 71-76, 81-86, 110-115, 116-121, 161-166), aufweisend:
- eine Säule (2, 3, 22, 23, 42, 43, 66);
- einen oder mehrere an der Säule (2, 3, 22, 23, 42, 43, 66) fixierbare Querarme (13, 14, 15, 33, 34, 35, 53, 54, 55, 167, 168, 169) zum Bestücken mit mindestens einem Teil der Leitungen (4-9, 24-29, 44-49, 71-76, 81-86, 110-115, 116-121, 161-166);
- eine Anzahl von ersten Montageteilen, die an der Säule (2, 3, 22, 23, 42, 43, 66) und/oder den Querarmen (13, 14, 15, 33, 34, 35, 53, 54, 55, 167, 168, 169) befestigt sind zum Zwecke des Montierens der Leitungen (4-9, 24-29, 44-49, 71-76, 81-86, 110-115, 116-121, 161-166), wobei die Säule (2, 3, 22, 23, 42, 43, 66) und/oder die Querarme (13, 14, 15, 33, 34, 35, 53, 54, 55, 167, 168, 169) mindestens ein elektrisch isolierendes Teil an der Position der Montagehöhe der Leitungen (4-9, 24-29, 44-49, 71-76, 81-86, 110-115, 116-121, 161-166) aufweisen, wobei über einer vorbestimmten Höhe mindestens die Querarme (13, 14, 15, 33, 34, 35, 53, 54, 55, 167, 168, 169) aus einem elektrisch isolierenden Material ausgebildet sind, **dadurch gekennzeichnet, dass** die Querarme aus synthetischem Material bestehen, wie zum Beispiel Kunststoff (13, 14, 15, 33, 34, 35, 53, 54, 55, 167, 168, 169), und die ersten Montageteile so als Aufbau an der Säule (2, 3, 22, 23, 42, 43, 66) angeordnet sind, dass sie in einem Polygon im Wesentlichen auf dem Umfang eines gedachten Kreises oder einer gedachten Ellipse liegen.

2. Hochspannungsmast gemäß Anspruch 1, wobei der Mast und/oder die Querarme aus faserverstärktem Epoxid, Polyester, oder einem ähnlichem synthetischen Material gefertigt sind.

3. Hochspannungsmast gemäß einem oder mehrerer der vorgehenden Ansprüche, aufweisend zweite Montageteile für Mastkompensierungsleitungen (11, 12, 31, 32, 171, 172).

4. Hochspannungsmast gemäß Anspruch 3, wobei die zweiten Montageteile im Wesentlichen an den äußeren Enden der untern Querarme (13, 33, 53, 169) angeordnet sind.

5. Hochspannungsmast gemäß einem der Ansprüche 1 bis 4, aufweisend ein Verbindungsteil zum gegenseitigen Verbinden der Mastkompensierungsleitungen und der Erdungskompensierungsleitungen (16, 17, 36, 37, 175, 176) auf vorzugsweise gekreuzte Art und Weise.

6. Hochspannungsmast gemäß einem der Ansprüche 1 bis 5,
wobei die Querarme und die ersten Montageteile so als Aufbau an der Säule angeordnet sind, dass sie ein Polygon, vorzugsweise ein regelmäßiges Vieleck, bilden, in dem die Eckpunkte im Wesentlichen auf dem Umfang eines gedachten Kreises oder einer gedachten Ellipse, oder einer äquivalenten Kurve, liegen, mindestens in Bezug auf die Begrenzung des magnetischen Feldes.

7. Hochspannungsmast gemäß einem oder mehrerer der vorgehenden Ansprüche, wobei die Oberfläche des Masts und/oder der Querarme ein Verstärkungsprofil aufweist.

8. Hochspannungsmast gemäß einem oder mehrerer der vorgehenden Ansprüche, aufweisend eine Strebe, die elektrisch isolierendes Material, vorzugsweise Kunststoff, aufweist.

9. Hochspannungsmast gemäß einem oder mehrerer der Ansprüche 1 bis 8, wobei der Hochspannungsmast mit einer ersten Anzahl von Querarmen (62, 63, 104, 105) zum Tragen einer Anzahl von Leitungen (71-76, 115-121) eines ersten Spannungsniveaus und einer zweiten Anzahl von Querarmen (64, 65, 102, 103) zum Tragen von Leitungen (81-86, 110-115) eines zweiten Spannungsniveaus ausgestattet ist.

10. Hochspannungsmast gemäß Anspruch 9, wobei das erste Spannungsniveau in der Größenordnung von vorzugsweise 380 kV ist und ein zweites Spannungsniveau in der Größenordnung von vorzugsweise 150 kV ist.

11. System, aufweisend eine Anzahl von Hochspannungsmasten gemäß einem oder mehrerer der Ansprüche 1 bis 10, wobei eine vorbestimmte Anzahl von Transportleitungen an den Masten mittels der korrespondierenden ersten Montageteile von wechselseitig benachbarten Masten montiert sind.

12. System gemäß Anspruch 11, wobei die Erdungskompensierungsleitungen mittels einer steuerbaren Spannungsquelle mit Energie versorgt werden.

13. System gemäß Anspruch 11 oder 12, wobei der Erdungskompensierungsleitungen relativ zur Erde isoliert sind.

14. System gemäß einem oder mehrerer der Ansprüche 12 bis 14, aufweisend eine vorbestimmte Anzahl von Spannvorrichtungen zum Platzieren und Halten mindestens der Transportleitungen unter mechanischer Vorspannung.

15. Verfahren zum Transportieren von elektrischer Energie über eine Anzahl von Hochspannungsmasten gemäß Anspruch 1, aufweisend die Schritte zum:
- Liefern von elektrischer Energie an das System und/oder die Leitungen (4-9, 24-29, 44-49, 71-76, 81-86, 110-115, 116-121, 161-166), die durch den Mast (1, 20, 40, 60, 100, 160) gemäß Anspruch 1 getragen werden,
- Bewirken, dass die Energie durch die Leitungen (4-9, 24-29, 44-49, 71-76, 81-86, 110-115, 116-121, 161-166) fließt,
- Abziehen der Energie aus den Leitungen (4-9, 24-29, 44-49, 71-76, 81-86, 110-115, 116-121, 161-166) an einer vorbestimmten Abnahmeposition davon,
wobei eine oder mehrere der Erdungskompensierungsleitungen (16, 17, 36, 37, 175, 176) im Wesentlichen nahe der Erdoberfläche entlang der Route des Systems angeordnet sind, wobei die Erdungskompensierungsleitungen (16, 17, 36, 37, 175, 176) mit einer geeigneten Energieversorgung zum Kompensieren von Feldern ausgestattet sind, die von den Transportleitungen kommen (4-9, 24-29, 44-49, 71-76, 81-86, 110-115, 116-121, 161-166).

## Revendications

1. Pylône à haute tension (1, 20, 40, 60, 100, 160) pour supporter un certain nombre de conducteurs (4 à 9, 24 à 29, 44 à 49, 71 à 76, 81 à 86, 110 à 115, 116 à 121, 161 à 166), comprenant :
- un montant (2, 3, 22, 23, 42, 43, 66) ;
- une ou plusieurs barres transversales (13, 14, 15, 33, 34, 35, 53, 54, 55, 167, 168, 169) pouvant être fixées sur le montant (2, 3, 22, 23, 42, 43, 66) pour montage sur celui-ci d'au moins une partie des conducteurs (4 à 9, 24 à 29, 44 à 49, 71 à 76, 81 à 86, 110 à 115, 116 à 121, 161 à 166);
- un certain nombre de premiers organes de montage fixés sur le montant (2, 3, 22, 23, 42, 43, 66) et/ou les barres transversales (13, 14, 15, 33, 34, 35, 53, 54, 55, 167, 168, 169) dans le but de monter les conducteurs (4 à 9, 24 à 29, 44 à 49, 71 à 76, 81 à 86, 110 à 115, 116 à 121, 161 à 166), dans lequel le montant (2, 3, 22, 23, 42, 43, 66) et/ou les barres transversales (13, 14, 15, 33, 34, 35, 53, 54, 55, 167, 168, 169) comprennent au moins une partie électriquement isolante au niveau de la position de la hauteur de montage des conducteurs (4 à 9, 24 à 29, 44 à 49, 71 à 76, 81 à 86, 110 à 115, 116 à 121, 161 à 166), dans lequel au-dessus d'une hauteur prédéterminée au moins les barres transversales (13, 14, 15, 33, 34, 35, 53, 54, 55, 167, 168, 169) sont construites à partir d'un matériau électriquement isolant, **caractérisé en ce que** les barres transversales de matériau synthétique tel que la matière plastique (13, 14, 15, 33, 34, 35, 53, 54, 55, 167,168, 169) et les premiers organes de montage sont agencés comme un ensemble sur le montant (2, 3, 22, 23, 42, 43, 66) de sorte qu'ils sont situés dans un polygone sensiblement sur la périphérie d'un cercle ou d'une ellipse imaginaire.

2. Pylône à haute tension selon la revendication 1, dans lequel le pylône et/ou les barres transversales sont fabriqués à partir d'époxy renforcé de fibre, dé polyester ou d'un matériau synthétique similaire.

3. Pylône à haute tension selon une ou plusieurs des revendications précédentes, comprenant des seconds organes de montage pour des conducteurs de compensation de pylône (11, 12, 31, 32, 171, 172).

4. Pylône à haute tension selon la revendication 3, dans lequel les seconds organes de montage sont agencés sensiblement sur les extrémités externes de la barre transversale inférieure (13, 33, 53, 169).

5. Pylône à haute tension selon l'une quelconque des revendications 1 à 4, comprenant un organe de connexion pour connecter mutuellement les conducteurs de compensation de pylône et les conducteurs de compensation de masse (16, 17, 36, 37, 175, 176) de préférence de façon croisée.

6. Pylône à haute tension selon l'une quelconque des revendications 1 à 5, dans lequel les barres transversales et les premiers organes de montage sont agencés comme un ensemble sur le montant de sorte qu'ils forment un polygone, de préférence une polyforme régulière dans laquelle les points d'angle sont situés sensiblement sur la périphérie d'un cercle ou d'une ellipse imaginaire, ou une courbe équivalente, au moins par rapport à la limitation des champs magnétiques.

7. Pylône à haute tension selon une ou plusieurs des revendications précédentes, dans lequel la surface du pylône et/ou des barres transversales comprend des ondulations.

8. Pylône à haute tension selon une ou plusieurs des revendications précédentes, comprenant un hauban comprenant un matériau électriquement isolant, de préférence de la matière plastique.

9. Pylône à haute tension selon une ou plusieurs des revendications 1 à 8, dans lequel le pylône à haute tension est doté d'un premier nombre de barres transversales (62, 63, 104, 105) pour supporter un certain nombre de conducteurs (71 à 76, 116 à 121) d'un premier niveau de tension et d'un second nombre de barres transversales (64, 65, 102, 103) pour supporter des conducteurs (81 à 86, 110 à 115) d'un second niveau de tension.

10. Pylône à haute tension selon la revendication 9, dans lequel le premier niveau de tension est de l'ordre de grandeur de préférence de 380 kV et le second niveau de tension est de l'ordre de grandeur de préférence de 150 kV.

11. Système comprenant un certain nombre de pylônes à haute tension selon une ou plusieurs des revendications 1 à 10, dans lequel un nombre prédéterminé de conducteurs de transport est monté sur les pylônes au moyen des premiers organes de montage correspondants de pylônes mutuellement adjacents.

12. Système selon la revendication 11, dans lequel les conducteurs de compensation de masse reçoivent de l'énergie au moyen d'une source d'alimentation contrôlable.

13. Système selon la revendication 11 ou 12, dans lequel les conducteurs de compensation de masse sont isolés par rapport à la masse.

14. Système selon une ou plusieurs des revendications 12 et 13, comprenant un nombre prédéterminé de dispositifs de mise en tension pour placer et maintenir au moins les conducteurs de transport sous une sollicitation mécanique.

15. Procédé pour le transport d'énergie électrique au moyen d'un certain nombre de pylônes à haute tension selon la revendication 1, comprenant les étapes consistant à :
- fournir de l'énergie électrique au système et/ou aux conducteurs (4 à 9, 24 à 29, 44 à 49, 71 à 76, 81 à 86, 110 à 115, 116 à 121, 161 à 166) supportés par les pylônes (1, 20, 40, 60, 100, 160),
- amener l'énergie à circuler à travers les conducteurs (4 à 9, 24 à 29, 44 à 49, 71 à 76, 81 à 86, 110 à 115, 116 à 121, 161 à 166),
- prendre l'énergie des conducteurs (4 à 9, 24 à 29, 44 à 49, 71 à 76, 81 à 86, 110 à 115, 116 à 121, 161 à 166) en un emplacement de prise prédéterminé,
dans lequel un ou plusieurs conducteurs de compensation de masse (16, 17, 36, 37, 175, 176) sont agencés sensiblement près de la surface de masse le long du trajet du système, lesdits conducteurs de compensation de masse (16, 17, 36, 37, 175, 176) recevant une alimentation en énergie appropriée pour compenser les champs provenant des conducteurs de transport (4 à 9, 24 à 29, 44 à 49, 71 à 76, 81 à 86, 110 à 115, 116 à 121, 161 à 166).
